(19) Europäisches Patentamt
European Patent Office
Office européen des brevets

(11) EP 1 713 859 B1

(12) **EUROPÄISCHE PATENTSCHRIFT**

(45) Veröffentlichungstag und Bekanntmachung des Hinweises auf die Patenterteilung:
**09.05.2007 Patentblatt 2007/19**

(21) Anmeldenummer: **05715240.7**

(22) Anmeldetag: **02.02.2005**

(51) Int Cl.:
***C08L 67/00*** *(2006.01)*

(86) Internationale Anmeldenummer:
**PCT/EP2005/001015**

(87) Internationale Veröffentlichungsnummer:
**WO 2005/075563 (18.08.2005 Gazette 2005/33)**

(54) **FLIESSFÄHIGE POLYESTERFORMMASSEN**

FLUID POLYESTER MOULDING MASSES

MASSES DE MOULAGE FLUIDES EN POLYESTER

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **04.02.2004 DE 102004005657**

(43) Veröffentlichungstag der Anmeldung:
**25.10.2006 Patentblatt 2006/43**

(73) Patentinhaber: **BASF Aktiengesellschaft**
**67056 Ludwigshafen (DE)**

(72) Erfinder:
- **EIPPER, Andreas**
  **67067 Ludwigshafen (DE)**
- **BRUCHMANN, Bernd**
  **67251 Freinsheim (DE)**
- **SCHERZER, Dietrich**
  **67433 Neustadt (DE)**
- **STUMBE, Jean-Francois**
  **F-67200 Strasbourg (FR)**
- **WEISS, Carsten**
  **67063 Ludwigshafen (DE)**
- **GRUBER, Freddy**
  **76877 Offenbach (DE)**

(56) Entgegenhaltungen:

| | |
|---|---|
| **EP-A- 1 344 794** | **WO-A-03/004546** |
| **WO-A-03/064502** | **WO-A-03/093343** |
| **US-A- 5 136 014** | **US-A1- 2003 082 384** |
| **US-B1- 6 300 424** | |

- **CARR P L ET AL: "Dielectric and mechanical characterization of aryl ester dendrimer/PET blends" POLYMER, ELSEVIER SCIENCE PUBLISHERS B.V, GB, Bd. 37, Nr. 12, 1996, Seiten 2395-2401, XP004069150 ISSN: 0032-3861**
- **LUMANN N.R. & AL: "The convergent synthesis of Poly(glycerol-succininc acid) Dendritic Macromolecules" CHEMISTRY AN EUROPEAN JOURNAL, Bd. 9, 2003, Seiten 5618-5626, XP002327733**
- **LIN Q. & AL.: "Polymerization of A2 with B3 Monomers: A Facile Approach to Hyperbranched Poly(aryl ester)s" MACROMOLECULES, Bd. 36, 2003, Seiten 9809-9816, XP002327734**
- **MASSA D J ET AL: "NOVEL BLENDS OF HYPERBRANCHED POLYESTERS AND LINEAR POLYMERS" MACROMOLECULES, AMERICAN CHEMICAL SOCIETY. EASTON, US, Bd. 28, Nr. 9, 24. April 1995 (1995-04-24), Seiten 3214-3220, XP000500418 ISSN: 0024-9297**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 713 859 B1

## Beschreibung

Die Erfindung betrifft thermoplastische Formmassen enthaltend

A) 10 - 99,99 Gew.-% mindestens eines thermoplastischen Polyesters

B) 0,01 - 50 Gew.-% eines hoch- oder hyperverzweigten Polyesters des Typs $A_xB_y$ mit x mindestens 1,1 und y mindestens 2,1

C) 0 - 60 Gew.-% weiterer Zusatzstoffe,

wobei die Summe der Gewichtsprozente der Komponenten A) bis C) 100 % ergibt.

Weiterhin betrifft die Erfindung die Verwendung der erfindungsgemäßen Formmassen zur Herstellung von Fasern, Folien und Formkörpern jeglicher Art sowie die hierbei erhältlichen Formkörper.

Zur Verbesserung der Fließfähigkeit werden üblicherweise zu teilkristallinen Thermoplasten niedermolekulare Additive zugegeben. Die Wirkung derartiger Additive ist jedoch stark beschränkt, da z.B. die Abnahme der mechanischen Eigenschaften ab einer bestimmten Zugabemenge des Additivs nicht mehr tolerierbar ist.

Dendritische Polymere mit perfekt symmetrischer Struktur, sogenannte Dendrimere, lassen sich ausgehend von einem zentralen Molekül durch kontrollierte schrittweise Verknüpfung von jeweils zwei oder mehr di- oder mehrfunktionellen Monomeren mit jedem bereits gebundenen Monomer herstellen. Dabei wächst mit jedem Verknüpfungsschritt die Zahl der Monomerendgruppen (und damit der Verknüpfungen) exponentiell an, und man erhält Polymere mit baumartigen Strukturen, im Idealfall kugelförmig, deren Äste jeweils exakt dieselbe Anzahl von Monomereinheiten enthalten. Aufgrund dieser perfekten Struktur sind die Polymereigenschaften vorteilhaft, beispielsweise beobachtet man eine überraschend geringe Viskosität und eine hohe Reaktivität aufgrund der hohen Anzahl funktioneller Gruppen an der Kugeloberfläche. Allerdings wird die Herstellung dadurch verkompliziert, dass bei jedem Verknüpfungsschritt Schutzgruppen eingeführt und wieder entfernt werden müssen und Reinigungsoperationen erforderlich sind, weshalb man Dendrimere üblicherweise nur im Labormaßstab herstellt.

Jedoch kann man mit großtechnischen Verfahren hochverzweigte bzw. hyperverzweigte Polymere herstellen. Sie weisen neben perfekten dendritischen Strukturen auch lineare Polymerketten und ungleiche Polymeräste auf, was jedoch die Polymereigenschaften verglichen zu denen der perfekten Dendrimere nicht wesentlich verschlechtert. Hyperverzweigte Polymere lassen sich über zwei Synthesewege herstellen, die als $AB_2$ und $A_x$+ $B_y$ bekannt sind. Darin stehen $A_x$ und $B_y$ für verschiedene Monomere und die Indices x und y für die Anzahl der funktionellen Gruppen, die in A bzw. B enthalten sind, also für die Funktionalität von A bzw. B. Beim $AB_2$-Weg wird ein trifunktionelles Monomer mit einer reaktiven Gruppe A und zwei reaktiven Gruppen B zu einem hoch- oder hyperverzweigten Polymer umgesetzt. Bei der $A_x$ + $B_y$-Synthese, dargestellt am Beispiel der $A_2$ + $B_3$-Synthese, setzt man ein difunktionelles Monomer $A_2$ mit einem trifunktionellen Monomer $B_3$ um. Dabei entsteht zunächst ein 1:1-Addukt aus A und B mit im Mittel einer funktionellen Gruppe A und zwei funktionellen Gruppen B, das dann ebenfalls zu einem hoch- oder hyperverzweigten Polymer reagieren kann.

Aus der WO-97/45474 sind Thermoplastzusammensetzungen bekannt, welche dendrimere Polyester als $AB_2$-Molekül enthalten. Hierbei reagiert ein mehrfunktioneller Alkohol als Kernmolekül mit Dimethylolpropionsäure als $AB_2$-Molekül zu einem dendrimeren Polyester. Dieser enthält nur OH-Funktionalitäten am Ende der Kette. Nachteilig an diesen Mischungen ist die hohe Glastemperatur der dendrimeren Polyester, die vergleichsweise aufwändige Herstellung und vor allem die schlechte Löslichkeit der Dendrimere in der Polyestermatrix.

Gemäß der Lehre der DE-A 101 32 928 führt die Einarbeitung derartiger Verzweiger mittels Konfektionierung und Nachkondensation in fester Phase zu einer Verbesserung der Mechanik (Molekulargewichtsaufbau). Nachteilig an der beschriebenen Verfahrensvariante ist die lange Herstellzeit sowie bereits oben aufgeführten nachteiligen Eigenschaften.

Der vorliegenden Erfindung lag daher die Aufgabe zugrunde, thermoplastische Polyesterformmassen zur Verfügung zu stellen, welche eine gute Fließfähigkeit und gleichzeitig gute mechanische Eigenschaften aufweisen.

Demgemäß wurden die eingangs definierten Formmassen gefunden. Bevorzugte Ausführungsformen sind den Unteransprüchen zu entnehmen.

Als Komponente (A) enthalten die erfindungsgemäßen Formmassen 10 bis 99,99, bevorzugt 30 bis 99,5 und insbesondere 30 bis 99,3 Gew.-% mindestens eines thermoplastischen Polyesters, welcher verschieden von B) ist.

Allgemein werden Polyester A) auf Basis von aromatischen Dicarbonsäuren und einer aliphatischen oder aromatischen Dihydroxyverbindung verwendet.

Eine erste Gruppe bevorzugter Polyester sind Polyalkylenterephthalate, insbesondere solche mit 2 bis 10 C-Atomen im Alkoholteil.

Derartige Polyalkylenterephthalate sind an sich bekannt und in der Literatur beschrieben. Sie enthalten einen

aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Als bevorzugte Dicarbonsäuren sind 2,6-Naphthalindicarbonsäure, Terephthalsäure und Isophthalsäure oder deren Mischungen zu nennen. Bis zu 30 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Als besonders bevorzugte Polyester (A) sind Polyalkylenterephthalate, die sich von Alkandiolen mit 2 bis 6 C-Atomen ableiten, zu nennen. Von diesen werden insbesondere Polyethylenterephthalat, Polypropylenterephthalat und Polybutylenterephthalat oder deren Mischungen bevorzugt. Weiterhin bevorzugt sind PET und/oder PBT, welche bis zu 1 Gew.%, vorzugsweise bis zu 0,75 Gew.-% 1,6-Hexandiol und/oder 2-Methyl-1,5-Pentandiol als weitere Monomereinheiten enthalten.

Die Viskositätszahl der Polyester (A) liegt im allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628.

Insbesondere bevorzugt sind Polyester, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsvertahren (z.B. Potentiometrie) bestimmt.

Insbesondere bevorzugte Formmassen enthalten als Komponente A) eine Mischung aus Polyestern, welche verschieden von PBT sind, wie beispielsweise Polyethylenterephthalat (PET). Der Anteil z.B. des Polyethylenterephthalates beträgt vorzugsweise in der Mischung bis zu 50, insbesondere 10 bis 35 Gew.-%, bezogen auf 100 Gew.-% A).

Weiterhin ist es vorteilhaft PET Rezyklate (auch scrap-PET genannt) gegebenenfalls in Mischung mit Polyalkylenterephthalaten wie PBT einzusetzen.

Unter Rezyklaten versteht man im allgemeinen:

1) sog. Post Industrial Rezyklat: hierbei handelt es sich um Produktionsabfälle bei der Polykondensation oder bei der Verarbeitung z.B. Angüsse bei der Spritzgussverarbeitung, Anfahrware bei der Spritzgussverarbeitung oder Extrusion oder Randabschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET Flaschen für Mineralwasser, Softdrinks und Säfte.

Beide Arten von Rezyklat können entweder als Mahlgut oder in Form von Granulat vorliegen. Im letzteren Fall werden die Rohrezyklate nach der Auftrennung und Reinigung in einem Extruder aufgeschmolzen und granuliert. Hierdurch wird meist das Handling, die Rieselfähigkeit und die Dosierbarkeit für weitere Verarbeitungsschritte erleichtert.

Sowohl granulierte als auch als Mahlgut vorliegende Rezyklate können zum Einsatz kommen, wobei die maximale Kantenlänge 10 mm, vorzugsweise kleiner 8 mm betragen sollte.

Aufgrund der hydrolytischen Spaltung von Polyestern bei der Verarbeitung (durch Feuchtigkeitsspuren) empfiehlt es sich, das Rezyklat vorzutrocknen. Der Restfeuchtegehalt nach der Trocknung beträgt vorzugsweise <0,2 %, insbesondere <0,05 %.

Als weitere Gruppe sind voll aromatische Polyester zu nennen, die sich von aromatischen Dicarbonsäuren und aromatischen Dihydroxyverbindungen ableiten.

Als aromatische Dicarbonsäuren eignen sich die bereits bei den Polyalkylenterephthalaten beschriebenen Verbindungen. Bevorzugt werden Mischungen aus 5 bis 100 mol% Isophthalsäure und 0 bis 95 mol% Terephthalsäure, insbesondere Mischungen von etwa 80 % Terephthalsäure mit 20 % Isophthalsäure bis etwa äquivalente Mischungen dieser beiden Säuren verwendet.

Die aromatischen Dihydroxyverbindungen haben vorzugsweise die allgemeine Formel

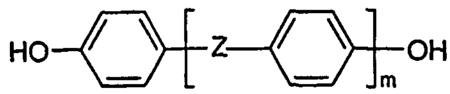

,

in der Z eine Alkylen- oder Cycloalkylengruppe mit bis zu 8 C-Atomen, eine Arylengruppe mit bis zu 12 C-Atomen, eine Carbonylgruppe, eine Sulfonylgruppe, ein Sauerstoff- oder Schwefelatom oder eine chemische Bindung darstellt und in der m den Wert 0 bis 2 hat. Die Verbindungen können an den Phenylengruppen auch $C_1$-$C_6$-Alkyl- oder Alkoxygruppen und Fluor, Chlor oder Brom als Substituenten tragen.

Als Stammkörper dieser Verbindungen seinen beispielsweise

Dihydroxydiphenyl,
Di-(hydroxyphenyl)alkan,
Di-(hydroxyphenyl)cycloalkan,
Di-(hydroxyphenyl)sulfid,
Di-(hydroxyphenyl)ether,
Di-(hydroxyphenyl)keton,
di-(hydroxyphenyl)sulfoxid,
$\alpha,\alpha'$-Di-(hydroxyphenyl)-dialkylbenzol,
Di-(hydroxyphenyl)sulfon, Di-(hydroxybenzoyl)benzol
Resorcin und
Hydrochinon sowie deren kernalkylierte oder kernhalogenierte Derivate genannt.

Von diesen werden

4,4'-Dihydroxydiphenyl,
2,4-Di-(4'-hydroxyphenyl)-2-methylbutan
$\alpha,\alpha'$-Di-(4-hydroxyphenyl)-p-diisopropylbenzol,
2,2-Di-(3'-methyl-4'-hydroxyphenyl)propan und
2,2-Di-(3'-chlor-4'-hydroxyphenyl)propan,

sowie insbesondere

2,2-Di-(4'-hydroxyphenyl)propar
2,2-Di-(3',5-dichlordihydroxyphenyl)propan,
1,1-Di-(4'-hydroxyphenyl)cyclohexan,
3,4'-Dihydroxybenzophenon,
4,4'-Dihydroxydiphenylsulfon und
2,2-Di(3',5'-dimethyl-4'-hydroxyphenyl)propan

oder deren Mischungen bevorzugt.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Selbstverständlich können auch Polyesterblockcopolymere wie Copolyetherester verwendet werden. Derartige Produkte sind an sich bekannt und in der Literatur, z.B. in der US_A 3 651 014, beschrieben. Auch im Handel sind entsprechende Produkte erhältlich, z.B. Hytrel® (DuPont).

Als Polyester sollen erfindungsgemäß auch halogenfreie Polycarbonate verstanden werden. Geeignete halogenfreie Polycarbonate sind beispielsweise solche auf Basis von Diphenolen der allgemeinen Formel

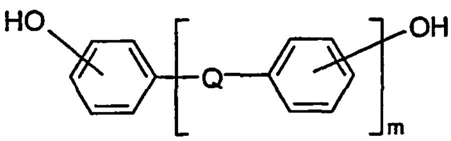

worin Q eine Einfachbindung, eine $C_1$- bis $C_8$-Alkylen-, eine $C_2$- bis $C_3$-Alkyliden-, eine $C_3$- bis $C_6$-Cycloalkylidengruppe,

eine $C_6$- bis $C_{12}$-Arylengruppe sowie -O-, -S- oder -$SO_2$- bedeutet und m eine ganze Zahl von 0 bis 2 ist.

Die Diphenole können an den Phenylenresten auch Substituenten haben wie $C_1$- bis $C_6$-Alkyl oder $C_1$- bis $C_6$-Alkoxy.

Bevorzugte Diphenole der Formel sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan. Besonders bevorzugt sind 2,2-Bis-(4-hydroxyphenyl)-propan und 1,1-Bis-(4-hydroxyphenyl)-cyciohexan, sowie 1,1-Bis-(4-hydroxyphenyl)-3,3,5-trimethylcyclohexan.

Sowohl Homopolycarbonate als auch Copolycarbonate sind als Komponente A geeignet, bevorzugt sind neben dem Bisphenol A-Homopolymerisat die Copolycarbonate von Bisphenol A.

Die geeigneten Polycarbonate können in bekannter Weise verzweigt sein, und zwar vorzugsweise durch den Einbau von 0,05 bis 2,0 mol-%, bezogen auf die Summe der eingesetzten Diphenole, an mindestens trifunktionellen Verbindungen, beispielsweise solchen mit drei oder mehr als drei phenolischen OH-Gruppen.

Als besonders geeignet haben sich Polycarbonate erwiesen, die relative Viskositäten $\eta_{rel}$ von 1,10 bis 1,50, insbesondere von 1,25 bis 1,40 aufweisen. Dies entspricht mittleren Molekulargewichten $M_w$ (Gewichtsmittelwert) von 10 000 bis 200 000, vorzugsweise von 20 000 bis 80 000 g/mol.

Die Diphenole der allgemeinen Formel sind an sich bekannt oder nach bekannten Verfahren herstellbar.

Die Herstellung der Polycarbonate kann beispielsweise durch Umsetzung der Diphenole mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-t-Butylphenol aber auch langkettige Alkylphenole wie 4-(1,3-Tetramethyl-butyl)-phenol, gemäß DE-OS 28 42 005 oder Monoalkylphenole oder Dialkylphenole mit insgesamt 8 bis 20 C-Atomen in den Alkylsubstituenten gemäß DE-A 35 06 472, wie p-Nonylphenyl, 3,5-di-t Butylphenol, p-t-Octylphenol, p-Dodecylphenol, 2-(3,5-dimethyl-heptyl)-phenol und 4-(3,5-Dimethylheptyl)-phenol.

Halogenfreie Polycarbonate im Sinne der vorliegenden Erfindung bedeutet, dass die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Als weitere geeignete Komponenten A) seien amorphe Polyestercarbonate genannt, wobei Phosgen gegen aromatische Dicarbonsäureeinheiten wie Isophthalsäure und/oder Terephthalsäureeinheiten, bei der Herstellung ersetzt wurde. Für nähere Einzelheiten sei an dieser Stelle auf die EP-A 711 810 verwiesen.

Weitere geeignete Copolycarbonate mit Cycloalkylresten als Monomereinheiten sind in der EP-A 365 916 beschrieben.

Weiterhin kann Bisphenol A durch Bisphenol TMC ersetzt werden. Derartige Polycarbonate sind unter dem Warenzeichen APEC HT® der Firma Bayer erhältlich.

Als Komponente B) enthalten die erfindungsgemäßen Formmassen 0,01 bis 50, vorzugsweise 0,5 bis 20 und insbesondere 0,7 bis 10 Gew.-% eines hyperverzweigten Polyesterns des Typs $A_xB_y$, wobei

x mindestens 1,1 vorzugsweise mindestens 1,3, insbesondere mindestens 2

y mindestens 2,1, vorzugsweise mindestens 2,5, insbesondere mindestens 3

beträgt.

Selbstverständlich können als Einheiten A bzw. B auch Mischungen eingesetzt werden.

Unter einem Polyester des Typs $A_xB_y$ versteht man ein Kondensat, das sich aus einem x-funktionellen Molekül A und einem y-funktionellen Molekül B aufbaut. Beispielsweise sei genannt ein Polyester aus Adipinsäure als Molekül A (x = 2) und Glycerin als Molekül B (y = 3).

Unter hyperverzweigten Polyestern werden im Rahmen dieser Erfindung unvernetzte Makromoleküle mit Hydroxyl- und Carboxylgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hyperverzweigt" wird im Zusammenhang mit der vorliegenden Erfindung verstanden, dass der Verzweigungsgrad (Degree of Branching, DB), dass heißt die mittlere Anzahl dendritischer Verknüpfungen plus mittlere Anzahl

der Endgruppen pro Molekül, 10 bis 99.9 %, bevorzugt 20 bis 99 %, besonders bevorzugt 20 - 95 % beträgt. Unter "dendrimer" wird im Zusammenhang mit der vorliegenden Erfindung verstanden, dass der Verzweigungsgrad 99,9 - 100% beträgt. Zur Definition des "Degree of Branching" siehe H. Frey et al., Acta Polym. 1997, 48, 30.

Der Verzweigungsgrad DB (degree of branching) der betreffenden Stoffe ist definiert als

$$DB = \frac{T+Z}{T+Z+L} \times 100\ \%,$$

(wobei T die mittlere Anzahl der terminalen Monomereinheiten, Z die mittlere Anzahl der verzweigten Monomereinheiten und L die mittlere Anzahl der linearen Monomereinheiten in den Makromolekülen der jeweiligen Stoffe bedeuten).

Die Komponente B) weist vorzugsweise ein $M_n$ von 300 bis 30 000, insbesondere von 400 bis 25000 und ganz besonders von 500 bis 20000 g/mol auf, bestimmt mittels GPC, Standard PMMA, Laufmittel Dimethylacetamid.

Vorzugsweise weist B) eine OH-Zahl von 0 bis 6.00, vorzugsweise 1 bis 500, insbesondere von 20 bis 500 mg KOH/g Polyester gemäß DIN 53240 auf sowie bevorzugt eine COOH-Zahl von 0 bis 600, vorzugsweise von 1 bis 500 und insbesondere von 2 bis 500 mg KOH/g Polyester.

Die $T_g$ beträgt vorzugsweise von -50°C bis 140°C und insbesondere von -50 bis 100°C (mittels DSC, nach DIN 53765).

Insbesondere solche Komponenten B) sind bevorzugt, in denen mindestens eine OH-bzw. COOH-Zahl größer 0, vorzugsweise größer 0,1 und insbesondere größer 0,5 ist.

Insbesondere durch die nachfolgend beschriebenen Verfahren ist die erfindungsgemäße Komponente B) erhältlich, u.z. indem man

(a) eine oder mehrere Dicarbonsäuren oder eines oder mehrere Derivate derselben mit einem oder mehreren mindestens trifunktionellen Alkoholen
oder

(b) eine oder mehrere Tricarbonsäuren oder höhere Polycarbonsäuren oder eines oder mehrere Derivate derselben mit einem oder mehreren Diolen

in Gegenwart eines Lösemittels und optional in Gegenwart eines anorganischen, metallorganischen oder niedermolekularen organischen Katalysators oder eines Enzyms umsetzt. Die Umsetzung im Lösungsmittel ist die bevorzugte Herstellmethode.

Hochfunktionelle hyperverzweigte Polyester im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Zu den nach Variante (a) umsetzbaren Dicarbonsäuren gehören beispielsweise Oxalsäure, Malonsäure, Bernsteinsäure, Glutarsäure, Adipinsäure, Pimelinsäure, Korksäure, Azelainsäure, Sebacinsäure, Undecan-a,w-dicarbonsäure, Dodecan-a,w-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure sowie cis- und trans-Cyclopentan-1,3-dicarbonsäure,
wobei die oben genannten Dicarbonsäuren substituiert sein können mit einem oder mehreren Resten, ausgewählt aus $C_1$-$C_{10}$-Alkylgruppen, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,
$C_3$-$C_{12}$-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
$C_6$-$C_{14}$-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure.

Weiterhin gehören zu den nach Variante (a) umsetzbaren Dicarbonsäuren ethylenisch ungesättigte Säuren

wie beispielsweise Maleinsäure und Fumarsäure sowie aromatische Dicarbonsäuren wie beispielsweise Phthalsäure, Isophthalsäure oder Terephthalsäure.

Weiterhin lassen sich Gemische von zwei oder mehreren der vorgenannten Vertreter einsetzen.

Die Dicarbonsäuren lassen sich entweder als solche oder in Form von Derivaten einsetzen.

Unter Derivaten werden bevorzugt verstanden

- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
- ferner Mono- und Divinylester sowie
- gemischte Ester, bevorzugt Methylethylester.

Im Rahmen der bevorzugten Herstellung ist es auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Besonders bevorzugt setzt man Bernsteinsäure, Glutarsäure, Adipinsäure, Phthalsäure, Isophthalsäure, Terephthalsäure oder deren Mono- oder Dimethylester ein. Ganz besonders bevorzugt setzt man Adipinsäure ein.

Als mindestens trifunktionelle Alkohole lassen sich beispielsweise umsetzen: Glycerin, Butan-1,2,4-triol, n-Pentan-1,2,5-triol, n-Pentan-1,3,5-triol, n-Hexan-1,2,6-triol, n-Hexan-1,2,5-triol, n-Hexan-1,3,6-triol, Trimethylolbutan, Trimethylolpropan oder Di-Trimethylolpropan, Trimethylolethan, Pentaerythrit oder Dipentaerythrit; Zuckeralkohole wie beispielsweise Mesoerythrit, Threitol, Sorbit, Mannit oder Gemische der vorstehenden mindestens trifunktionellen Alkohole. Bevorzugt verwendet man Glycerin, Trimethylolpropan, Trimethylolethan und Pentaerythrit.

Nach Variante (b) umsetzbare Tricarbonsäuren oder Polycarbonsäuren sind beispielsweise 1,2,4-Benzoltricarbonsäure, 1,3,5-Benzoltricarbonsäure, 1,2,4,5-Benzoltetracarbonsäure sowie Mellitsäure.

Tricarbonsäuren oder Polycarbonsäuren lassen sich in der erfindungsgemäßen Reaktion entweder als solche oder aber in Form von Derivaten einsetzen.

Unter Derivaten werden bevorzugt verstanden

- die betreffenden Anhydride in monomerer oder auch polymerer Form,
- Mono-, Di- oder Trialkylester, bevorzugt Mono-, Di- oder Trimethylester oder die entsprechenden Mono-, Di- oder Triethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- Di- und Triester, ferner Mono-, Di- oder Trivinylester
- sowie gemischte Methylethylester.

Im Rahmen der vorliegenden Erfindung ist es auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um Komponente B) zu erhalten.

Als Diole für Variante (b) der vorliegenden Erfindung verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,10-Decandiol, 1,2-Decandiol, 1,12-Dodecandiol, 1,2-Dodecandiol, 1,5-Hexadien-3,4-diol, Cyclopentandiole, Cyclohexandiole, Inositol und Derivate, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H oder Gemische von zwei oder mehr Vertretern der voranstehenden Verbindungen, wobei n eine ganze Zahl ist und n = 4 bis 25. Dabei kann eine oder auch beide Hydroxylgruppen in den vorstehend genannten Diolen auch durch SH-Gruppen substituiert werden. Bevorzugt sind Ethylenglykol, Propan-1,2-diol sowie Diethylenglykol, Triethylenglykol, Dipropylenglykol und Tripropylenglykol.

Die Molverhältnis der Moleküle A zu Molekülen B im $A_x$ $B_y$-Polyester bei den Varianten (a) und (b) beträgt 4:1 bis 1:4, insbesondere 2:1 bis 1:2.

Die nach Variante (a) des Verfahrens umgesetzten mindestens trifunktionellen Alkohole können Hydroxylgruppen jeweils gleicher Reaktivität aufweisen. Bevorzugt sind hier auch mindestens trifunktionelle Alkohole, deren OH-Gruppen zunächst gleich reaktiv sind, bei denen sich jedoch durch Reaktion mit mindestens einer Säuregruppe ein Reaktivitätsabfall, bedingt durch sterische oder elektronische Einflüsse, bei den restlichen OH-Gruppen induzieren lässt. Dies ist beispielsweise bei der Verwendung von Trimethylolpropan oder Pentaerythrit der Fall.

Die nach Variante (a) umgesetzten mindestens trifunktionellen Alkohole können aber auch Hydroxylgruppen mit mindestens zwei chemisch unterschiedlichen Reaktivitäten aufweisen.

Die unterschiedliche Reaktivität der funktionellen Gruppen kann dabei entweder auf chemischen (z.B. primäre/sekundäre/tertiäre OH Gruppe) oder auf sterischen Ursachen beruhen.

Beispielsweise kann es sich bei dem Triol um ein Triol handeln, welches primäre und sekundäre Hydroxylgruppen aufweist, bevorzugtes Beispiel ist Glycerin.

Bei der Durchführung der erfindungsgemäßen Umsetzung nach Variante (a) kann man Triol oder Mischungen von Triolen einsetzen, welche bis zu 50 mol-% (bezogen auf die Polyol-Mischung) difunktionelle Alkohole enthalten können, jedoch wird bevorzugt in Abwesenheit von Diolen und monofunktionellen Alkoholen gearbeitet.

Bei der Durchführung der erfindungsgemäßen Umsetzung nach Variante (b) kann man die Tricarbonsäuren oder deren Mischungen einsetzen, welche bis zu 50 mol-%, bezogen auf die Säuremischung, difunktionelle Carbonsäuren enthalten können, jedoch wird bevorzugt in Abwesenheit von Mono- oder Dicarbonsäuren gearbeitet.

Das erfindungsgemäße Verfahren wird vorzugsweise in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

Zur Durchführung des erfindungsgemäß bevorzugten Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, $MgSO_4$ und $Na_2SO_4$. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH = 6, insbesondere = 5) und saures Aluminiumoxid zu nennen. Weiterhin sind beispielsweise Alumiumverbindungen der allgemeinen Formel $Al(OR)_3$ und Titanate der allgemeinen Formel $Ti(OR)_4$ als saure anorganische Katalysatoren einsetzbar, wobei die Reste R jeweils gleich oder verschieden sein können und unabhängig voneinander gewählt sind aus

$C_1$-$C_{10}$-Alkylresten, beispielsweise Methyl, Ethyl, n-Propyl, iso-Propyl, n-Butyl, isoButyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl oder n-Decyl,

$C_3$-$C_{12}$-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste R in $Al(OR)_3$ bzw. $Ti(OR)_4$ jeweils gleich und gewählt aus Isopropyl oder 2-Ethylhexyl.

Bevorzugte saure metallorganische Katalysatoren sind beispielsweise gewählt aus Dialkylzinnoxiden $R_2SnO$, wobei R wie oben stehend definiert ist. Ein besonders bevorzugter Vertreter für saure metallorganische Katalysatoren ist Di-n-butylzinnoxid, das als sogenanntes Oxo-Zinn kommerziell erhältlich ist, oder Di-n-butylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Das erfindungsgemäße Verfahren wird unter Inertgasatmosphäre durchgeführt, das heißt beispielsweise unter Kohlendioxid, Stickstoff oder Edelgas, unter denen insbesondere Argon zu nennen ist.

Das erfindungsgemäße Verfahren wird bei Temperaturen von 60 bis 200°C durchgeführt. Vorzugsweise arbeitet man bei Temperaturen von 130 bis 180, insbesondere bis 150°C oder darunter. Besonders bevorzugt sind maximale Temperaturen bis 145°C, ganz besonders bevorzugt bis 135°C.

Die Druckbedingungen des erfindungsgemäßen Verfahrens sind an sich unkritisch. Man kann bei deutlich verringertem Druck arbeiten, beispielsweise bei 10 bis 500 mbar. Das erfindungsgemäße Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei Atmosphärendruck.

Die Umsetzungsdauer des erfindungsgemäßen Verfahrens beträgt üblicherweise 10 Minuten bis 25 Stunden, bevorzugt 30 Minuten bis 10 Stunden und besonders bevorzugt eine bis 8 Stunden.

Nach beendeter Reaktion lassen sich die hochfunktionellen hyperverzweigten Polyester leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Weiterhin kann die Komponente B) in Gegenwart von Enzymen oder Zersetzungsprodukten von Enzymen hergestellt werden (gemäß DE-A 101 63163). Es gehören die erfindungsgemäß umgesetzten Dicarbonsäuren nicht zu den sauren organischen Katalysatoren im Sinne der vorliegenden Erfindung.

Bevorzugt ist die Verwendung von Lipasen oder Esterasen. Gut geeignete Lipasen und Esterasen sind Candida cylindracea, Candida lipolytica, Candida rugosä, Candida antarctica, Candida utilis, Chromobacterium viscosum, Geolrichum viscosum, Geotrichum candidum, Mucor javanicus, Mucor mihei, pig pancreas, pseudomonasspp., pseudomonas fluorescens, Pseudomonas cepacia, Rhizopus arrhizus, Rhizopus delemar, Rhizopus niveus, Rhizopus oryzae, Aspergillus niger, Penicillium roquefortii, Penicillium camembertii oder Esterase von Bacillus spp. und Bacillus thermoglucosidasius. Besonders bevorzugt ist Candida antarctica Lipase B. Die aufgeführten Enzyme sind kommerziell erhältlich, beispielsweise bei Novozymes Biotech Inc., Dänemark.

Bevorzugt setzt man das Enzym in immobilisierter Form ein, beispielsweise auf Kieselgel oder Lewatit®. Verfahren zur Immobilisierung von Enzymen sind an sich bekannt, beispielsweise aus Kurt Faber, "Biotransformations in organic chemistry", 3. Auflage 1997, Springer Verlag, Kapitel 3.2 "Immobilization" Seite 345-356. Immobilisierte Enzyme sind kommerziell erhältlich, beispielsweise bei Novozymes Biotech Inc., Dänemark.

Die Menge an immobilisiertem eingesetztem Enzym beträgt 0,1 bis 20 Gew.-%, insbesondere 10 bis 15 Gew.-%, bezogen auf die Masse der insgesamt eingesetzten umzusetzenden Ausgangsmaterialien.

Das erfindungsgemäße Verfahren wird bei Temperaturen über 60°C durchgeführt. Vorzugsweise arbeitet man bei Temperaturen von 100°C oder darunter. Bevorzugt sind Temperaturen bis 80°C, ganz besonders bevorzugt von 62 bis 75°C und noch mehr bevorzugt von 65 bis 75°C.

Das erfindungsgemäße Verfahren wird in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt mindestens 5 Gew.-Teile, bezogen auf die Masse der eingesetzten umzusetzenden Ausgangsmaterialien, bevorzugt mindestens 50 Gew.-Teile und besonders bevorzugt mindestens 100 Gew.-Teile. Mengen von über 10 000 Gew.-Teile Lösemittel sind nicht erwünscht, weil bei deutlich niedrigeren Konzentrationen die Reaktionsgeschwindigkeit deutlich nachlässt, was zu unwirtschaftlichen langen Umsetzungsdauern führt.

Das erfindungsgemäße Verfahren wird bei Drücken oberhalb von 500 mbar durchgeführt. Bevorzugt ist die Umsetzung bei Atmosphärendruck oder leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des erfindungsgemäßen Verfahrens beträgt üblicherweise 4 Stunden bis 6 Tage, bevorzugt 5 Stunden bis 5 Tage und besonders bevorzugt 8 Stunden bis 4 Tage.

Nach beendeter Reaktion lassen sich die hochfunktionellen hyperverzweigten Polyester isolieren, beispielsweise durch Abfiltrieren des Enzyms und Einengen, wobei man das Einengen üblicherweise bei vermindertem Druck durchführt. Weitere gut geeignete Aufarbeitungsmethoden sind Ausfällen nach Zugabe von Wasser und anschließendes Waschen und Trocknen.

Ein weiterer Gegenstand der vorliegenden Erfindung sind die nach dem erfindungsgemäßen Verfahren erhältlichen hochfunktionellen, hyperverzweigten Polyester. Sie zeichnen sich durch besonders geringe Anteile an Verfärbungen und Verharzungen aus. Zur Definition von hyperverzweigten Polymeren siehe auch: P.J. Flory, J. Am. Chem. Soc. 1952, 74, 2718 und A. Sunder et al., Chem. Eur. J. 2000, 6, No.1, 1-8. Unter "hochfunktionell hyperverzweigt" wird im Zusammenhang mit der vorliegenden Erfindung jedoch verstanden, dass der Verzweigungsgrad (Degree of branching), das heißt die mittlere Anzahl von dendritischen Verknüpfungen plus die mittlere Anzahl von Endgruppen pro Molekül 10 - 99,9 %, bevorzugt 20 - 99 %, besonders bevorzugt 30 - 90 % beträgt (siehe dazu H. Frey et al. Acta Polym. 1997, 48, 30).

Die erfindungsgemäßen Polyester haben ein Molekulargewicht $M_w$ von 500 bis 50 000 g/mol, bevorzugt 1000 bis 20 000, besonders bevorzugt 1000 bis 19 000. Die Polydispersität beträgt 1,2 bis 50, bevorzugt 1,4 bis 40, besonders bevorzugt 1,5 bis 30 und ganz besonders bevorzugt 1,5 bis 10. Sie sind üblicherweise gut löslich, d.h. man kann klare Lösungen mit bis zu 50 Gew.-%, in einigen Fällen sogar bis zu 80 Gew.-%, der erfindungsgemäßen Polyester in Tetrahydrofuran (THF), n-Butylacetat, Ethanol und zahlreichen anderen Lösemitteln darstellen, ohne dass mit bloßem Auge Gelpartikel detektierbar sind.

Die erfindungsgemäßen hochfunktionellen hyperverzweigten Polyester sind carboxyterminiert, carboxy- und Hydroxylgruppen-terminiert und vorzugsweise Hydroxylgruppen-terminiert.

Als Komponente C) können die erfindungsgemäßen Formmassen 0 bis 60, insbesondere bis zu 50 Gew.- % weiterer Zusatzstoffe und Verarbeitungshilfsmittel enthalten, welche verschieden von B) sind.

Als Komponente C) können die erfindungsgemäßen Formmassen 0 bis 5, vorzugsweise 0,05 bis 3 und insbesondere 0,1 bis 2 Gew.-% mindestens eines Esters oder Amids gesättigter oder ungesättigter aliphatischer Carbonsäuren mit 10 bis 40, bevorzugt 16 bis 22 C-Atomen mit aliphatischen gesättigten Alkoholen oder Aminen mit 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weitere übliche Zusatzstoffe C) sind beispielsweise in Mengen bis zu 40, vorzugsweise bis zu 30 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder III IV zum Monomerengemisch in den Kautschuk eingebaut

$$R^1C(COOR^2)=C(COOR^3)R^4 \qquad (I)$$

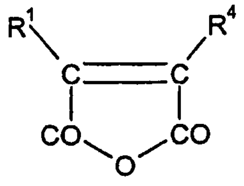

(II)

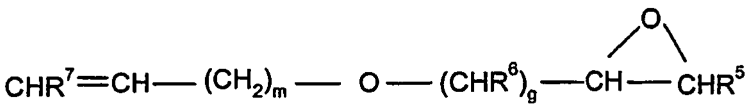

(III)

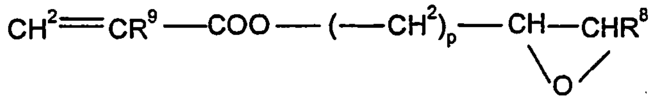

(IV)

wobei $R^1$ bis $R^9$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist

Vorzugsweise bedeuten die Reste $R^1$ bis $R^9$ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppenenthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestem.

Besonders bevorzugt sind Copolymerisate aus
50 bis 98, insbesondere 55 bis 95 Gew.-% Ethylen,
0,1 bis 40, insbesondere 0,3 bis 20 Gew.-% Glycidylacrylat
und/oder Glycidylmethacrylat, (Meth)acrylsäure und/oder Maleinsäureanhydrid, und
1 bis 45, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

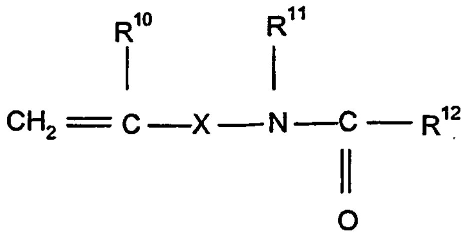

eingeführt werden können,
wobei die Substituenten folgende Bedeutung haben können:

$R^{10}$ Wasserstoff oder eine $C_1$- bis $C_4$-Alkylgruppe,

$R^{11}$ Wasserstoff, eine $C_1$- bis $C_8$-Alkylgruppe oder eine Arylgruppe, insbesondere Phenyl,

$R^{12}$ Wasserstoff, eine $C_1$- bis $C_{10}$-Alkyl-, eine $C_6$- bis $C_{12}$-Arylgruppe oder $-OR^{13}$

$R^{13}$ eine $C_1$- bis $C_8$-Alkyl- oder $C_6$- bis $C_{12}$-Arylgruppe, die gegebenenfalls mit O- oder N-haltigen Gruppen substituiert sein können,

X eine chemische Bindung, eine $C_1$- bis $C_{10}$-Alkylen- oder $C_6$-$C_{12}$-Arylengruppe oder

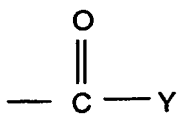

Y O-Z oder NH-Z und

Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben<br>zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290

beschrieben, sind ebenfalls bevorzugt.

Selbstverständlich können auch Mischungen der vorstehend aufgeführten Kautschuktypen eingesetzt werden.

Als faser- oder teilchenförmige Füllstoffe C) seien Kohlenstoffasern, Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 40 % eingesetzt werden.

Als bevorzugte faserförmige Füllstoffe seien Kohlenstoffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Mischungen von Glasfasern D) mit Komponente B) im Verhältnis von 1 : 100 bis 1 : 2 und bevorzugt von 1 : 10 bis 1 : 3 sind insbesondere bevorzugt.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X\text{-}(CH_2)_n)_k\text{-}Si\text{-}(O\text{-}C_mH_{2m+1})_{4-k}$$

in der die Substituenten folgende Bedeutung haben:

X $NH_2$-,

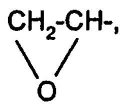 HO-,

n eine ganze Zahl von 2 bis 10, bevorzugt 3 bis 4

m eine ganze Zahl von 1 bis 5, bevorzugt 1 bis 2

k eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide genannt.

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Weitere Gleit- und Entformungsmittel werden üblicherweise in Mengen bis zu 1 Gew.-% eingesetzt. Es sind

bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylenhexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 $\mu$m, insbesondere von 0,1 bis 5 $\mu$m auf. Diese geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, in dem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 290°C.

Nach einer weiteren bevorzugten Arbeitsweise können die Komponenten B) sowie gegebenenfalls C) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Fließfähigkeit bei gleichzeitig guter Mechanik aus.

Insbesondere ist die Verarbeitung der einzelnen Komponenten (ohne Verklumpung oder Verbackung) problemlos und in kurzen Zykluszeiten möglich, so dass insbesondere dünnwändige Bauteile als Anwendung in Frage kommen.

Diese eignen sich zur Herstellung von Fasern, Folien und Formkörpern jeglicher Art, insbesondere für Anwendungen als Hecker, Schalter, Gehäuseteile, Gehäusedeckel, Scheinwerferhintergrund (Bezel), Brausenkopf, Amaturen, Bügeleisen, Drehschalter, Herdknöpfe, Friteusendeckel, Türgriffe, (Rück-)spiegelgehäuse, (Heck-)scheibenwischer, Lichtwellenleiterummantelungen.

Beispiele

Komponente A/1:

Polybutylenterephthalat mit einer Viskositätszahl VZ von 130 ml/g und einem Carboxylendgruppengehalt von 34 mva/kg (Ultradur® B 4520 der BASF AG) (VZ gemessen in 0,5 gew.-%iger Lösung aus Phenol/o-Dichlorbenzol), 1: 1-Mischung bei 25°C, enthaltend 0,65 Gew.-% Pentaerythrittetrastearat (Komponente C1 bezogen auf 100 Gew.-% A)

Komponente A/2:

Polyethylenterephthalat PET mit einer VZ von 74,5 ml/g.

Komponente A/3:

Polytrimethylenterephthalat mit einer VZ von 106 ml/g.

Komponente A/4:

Polycarbonat auf Basis von Bisphenol A und Diphenylcarbonat mit einer VZ von 59 ml/g.

Komponente A/5:

PBT mit VZ 130 ml/g, jedoch ohne Komponente C1.

Komponenten B:

| | Monomere | Mn (g/mol) | Mw (g/mol) | OH-Zahl (mg KOH/g) | Säure-Zahl (mg KOH/g) |
|---|---|---|---|---|---|
| B/1 | Adipinsäure und Glycerin | 1900 | 6910 | 416 | 31 |
| B/2 | Adipinsäure und Glycerin | 1730 | 2580 | 295 | 167 |
| B/3 | Adipinsäure und Glycerin | 4370 | 18220 | 248 | 93 |
| B/4 | Terephthalsäuredimethylester und Glycerin | 400 | 1140 | 273 | - |
| B/5 | Adipinsäure und TMP | 2450 | 12260 | 213 | 83 |
| B/6 | Adipinsäure und TMP | 2470 | 12570 | 216 | 106 |
| TMP: 1,1,1-Tris(hydroxymethyl)propan | | | | | |

Herstellung B/1:

1645 g (11,27 mol) Adipinsäure und 868 g (9,43 mol) Glycerin wurden in einem 5 I-Glaskolben vorgelegt, der mit Rührer, Innenthermometer, Gaseinleitungsrohr, Rückflusskühler und Vakuumanschluss mit Kühlfalle ausgerüstet war. Man gab 2,5 g Di-n-Butylzinnoxid zu, kommerziell erhältlich als Fascat® 4201, und erhitzte mit Hilfe eines Ölbads auf eine Innentemperatur von 140°C. Man legte einen verminderten Druck von 250 mbar an, um bei der Reaktion gebildetes Wasser abzutrennen. Die Reaktionsmischung wurde 4 Stunden bei der genannten Temperatur und dem genannten Druck gehalten, danach wurde auf 100 mbar abgesenkt und weitere 6 Stunden bei 140°C gehalten. Nach 8,5 Stunden wurden 383 g (4,16 mol) Glycerin zugegeben. Danach wurde auf 20 mbar abgesenkt und weitere 5 Stunden bei 140°C gehalten. Anschließend wurde auf Zimmertemperatur abgekühlt. Man erhielt 2409 g hyperverzweigten Polyester als klare, viskose Flüssigkeiten. Die analytischen Daten sind in Tabelle 1 zusammengefasst.

Herstellung B/2:

2016 g (13,81 mol) Adipinsäure und 1059 g (11,51 mol) Glycerin wurden in einem 51-Glaskolben vorgelegt, der mit Rührer, Innenthermometer, Gaseinleitungsrohr, Rückflusskühler und Vakuumanschluss mit Kühlfalle ausgerüstet war. Man gab 3,04 g Di-n-Butylzinnoxid zu, kommerziell erhältlich als Fascat® 4201, und erhitzte mit Hilfe eines Ölbads auf eine Innentemperatur von 125°C. Man legte einen verminderten Druck von 100 mbar an, um bei der Reaktion gebildetes Wasser abzutrennen. Die Reaktionsmischung wurde 11 Stunden bei der genannten Temperatur und dem genannten Druck gehalten. Anschließend wurde auf Zimmertemperatur abgekühlt. Man erhielt 2645 g hyperverzweigten Polyester als klare, viskose Flüssigkeiten. Die analytischen Daten sind in Tabelle 1 zusammengefasst.

Herstellung B/3:

2016 g (13,81 mol) Adipinsäure und 1059 g (11,51 mol) Glycerin wurden in einem 5 I-Glaskolben vorgelegt, der mit Rührer, Innenthermometer, Gaseinleitungsrohr, Rückflusskühler und Vakuumanschluss mit Kühlfalle ausgerüstet war. Man gab 3,04 g Di-n-Butylzinnoxid zu, kommerziell erhältlich, als Fascat® 4201, und erhitzte mit Hilfe eines Ölbads auf eine Innentemperatur von 150°C. Man legte einen verminderten Druck von 100 mbar an, um bei der Reaktion gebildetes Wasser abzutrennen. Die Reaktionsmischung wurde 9,5 Stunden bei der genannten Temperatur und dem genannten Druck gehalten. Anschließend wurde auf Zimmertemperatur abgekühlt. Man erhielt 2511 g hyperverzweigten Polyester als klare, viskose Flüssigkeiten. Die analytischen Daten sind in Tabelle 1 zusammengefasst.

Herstellung B/4:

1589 g (8,19 mol) Terephthalsäuredimethylester und 628 g (6,83 mol) Glycerin wurden in einem 5 1-Glaskolben vorgelegt, der mit Rührer, Innenthermometer, Gaseinleitungsrohr, Rückflusskühler und Vakuumanschluss mit Kühlfalle ausgerüstet war. Man gab 4,4 g Di-n-Butylzinnoxid zu, kommerziell erhältlich als Fascat® 4201, und erhitzte mit Hilfe eines Ölbads auf eine Innentemperatur von 140°C. Man legte einen verminderten Druck von 50 mbar an, um bei der Reaktion gebildetes Wasser abzutrennen. Die Reaktionsmischung wurde 34 Stunden bei der genannten Temperatur und dem genannten Druck gehalten. Anschließend wurde auf Zimmertemperatur abgekühlt. Man erhielt .... g hyperverzweigten Polyester als klare, sehr viskose oder fast feste Flüssigkeiten. Die analytischen Daten sind in Tabelle 1 zusammengefasst.

Herstellung B/5:

2000 g (13,70 mol) Adipinsäure und 1530 g (11,42 mol) 1,1,1-Tris(hydroxymethyl)propan (TMP) wurden in einem 51-Glaskolben vorgelegt, der mit Rührer, Innenthermometer, Gaseinleitungsrohr, Rückflusskühler und Vakuumanschluss mit Kühlfalle ausgerüstet war. Man gab 3,53 g Di-n-Butylzinnoxid zu, kommerziell erhältlich als Fascat® 4201, und erhitzte mit Hilfe eines Ölbads auf eine Innentemperatur von 135°C. Man legte einen verminderten Druck von 500 mbar an, um bei der Reaktion gebildetes Wasser abzutrennen. Die Reaktionsmischung wurde 3,5 Stunden bei der genannten Temperatur und dem genannten Druck gehalten, danach wurde auf 300 mbar abgesenkt und weitere 5,5 Stunden bei 140°C gehalten. Anschließend wurde auf Zimmertemperatur abgekühlt. Man erhielt 3093 g hyperverzweigten Polyester als klare, viskose Flüssigkeiten. Die analytischen Daten sind in Tabelle 1 zusammengefasst.

Herstellung B/6:

2000 g (13,70 mol) Adipinsäure und 1530 g (11,42 mol) TMP wurden in einem 5 1-Glaskolben vorgelegt, der mit Rührer, Innenthermometer, Gaseinleitungsrohr, Rückflusskühler und Vakuumanschluss mit Kühlfalle ausgerüstet war. Man gab 3,53 g Di-n-Butylzinnoxid zu, kommerziell erhältlich als Fascat® 4201, und erhitzte mit Hilfe eines Ölbads auf eine Innentemperatur von 135°C. Man legte einen verminderten Druck von 500 mbar an, um bei der Reaktion gebildetes Wasser abzutrennen. Die Reaktionsmischung wurde 4 Stunden bei der genannten Temperatur und dem genannten Druck gehalten, danach wurde auf 200 mbar abgesenkt und weitere 5 Stunden bei 140°C gehalten. Anschließend wurde auf Zimmertemperatur abgekühlt. Man erhielt 3100 g hyperverzweigten Polyester als klare, viskose Flüssigkeiten. Die analytischen Daten sind in Tabelle 1 zusammengefasst.

Komponente B/1V (zum Vergleich)

Hyperverzweigter Polyester aus Dimethylolpropionsäure gemäß WO 97/45474 mit:

| | |
|---|---|
| Mn | 1600 |
| Mw | 2100 |
| Tg | 40 |
| COOH: 6,1 mg KOH/g | OH: 488 mg KOH/g |

(Boltorn® H30, der Firma Perstorp AB, Schweden)

Komponente C/2:

Schnittglasfasem mit einer mittleren Dicke von 10 μm

Herstellung der Formmassen

Die Komponenten A) bis C) wurde auf einem Zweischneckenextruder bei 250 bis 260°C abgemischt und in ein Wasserbad extrudiert. Nach Granulierung und Trocknung wurden auf einer Spritzgussmaschine Prüfkörper gespritzt und geprüft.

Der MVR wurde gemäß ISO 11 33 bestimmt, der E-modul gemäß ISO 527-2, die Charpy-Schlagzähigkeit gemäß ISO 179-2/1eU, die VZ gemäß DIN 53728 bzw. ISO 1628.

Die erfindungsgemäßen Zusammensetzungen und die Ergebnisse der Messungen sind den Tabellen zu entnehmen.

Tabelle 1

| Komponenten [Gew.-%] | 1 | 2 | 3 | 4 | 5 | 6 |
|---|---|---|---|---|---|---|
| A/1 | 95 | | | | | 65 |
| A/5 | | 95 | | | | |
| A/2 | | | 95 | | | |

(fortgesetzt)

| Komponenten [Gew.-%] | 1 | 2 | 3 | 4 | 5 | 6 |
|---|---|---|---|---|---|---|
| A/3 | | | | 95 | | |
| A/4 | | | | | 95 | |
| B/5 | 5 | 5 | 5 | 5 | 5 | 5 |
| C/2 | | | | | | 30 |
| | | | | | | |
| VZ | 117 | 117,5 | 66,4 | 102,8 | 60,3 | 118 |
| MVR | 171 | 139 | >250 | 225 | 160 | 53,7 |
| Fließspirale 260/80°C - 2 mm (mm) | 48 | 48 | 33 | 59 | 21 | 36 |

Tabelle 2

| | 7 | 8 |
|---|---|---|
| A/1 | 99 | 96 |
| B/4 | 1,00 | 4,00 |
| | | |
| VZ | 105,7 | 102,8 |
| MVR | 97,4 | >250 |
| Fließspirale 260/80°C -2 mm (mm) | 46 | 92 |
| | | |
| Mechanik | | |
| Spannung bei Max: (N/mm) | 57,5 | 51,55 |
| Dehnung bei Streck (%) | 3,7 | 2,1 |
| E-Modul: (N/mm) | 2549 | 2721 |
| Schlagzähigkeit - gekerbt (kJ/m$^2$) | 2,3 | 1,3 |

Tabelle 3

| | 1V | 9 | 10 | 11 |
|---|---|---|---|---|
| A/1 | 100 | 99 | 98 | 97 |
| B/1 | | 1 | 2 | 3 |
| | | | | |
| Analyse | | | | |
| VZ | 119 | 122 | 121 | 114 |
| MVR[1] | 29,6 | 26,3 | 32,8 | 45,8 |
| | | | | |
| Mechanik | | | | |
| Spannung bei Bruch (N/mm$^2$) | 56,2 | 56,2 | 53,7 | 56,2 |

(fortgesetzt)

| | | | | |
|---|---|---|---|---|
| Mechanik | | | | |
| Streckdehnung (%) | 3,6 | 3,6 | 4,1 | 3,6 |
| E-Modul (N/mm$^2$) | 2488 | 2533 | 2377 | 2297 |
| Kerbschlagzähigkeit (23°C) (kJ/m$^2$) | 4,3 | 4,3 | 3,5 | 4,3 |
| Fließspirale 260/60°C 2 mm (cm) | 35,0 | 34,4 | 41,0 | 47,1 |
| [1]MVR bei 275°/2,16 kg | | | | |

Tabelle 4

| | 12 | 13 | 14 | 15 | 16 | 17 | 1V |
|---|---|---|---|---|---|---|---|
| A/1 | 99 | 97 | 95 | 99 | 97 | 95 | 100 |
| B/2 | 1 | 3 | 5 | | | | |
| B/3 | | | | 1 | 3 | 5 | |
| | | | | | | | |
| Analyse | | | | | | | |
| VZ | 115 | 115 | 113 | 115 | 116 | 109 | 119 |
| | | | | | | | |
| Mechanik | | | | | | | |
| Spannung bei Max: (N/mm) | 56,3 | 54,5 | 52,9 | 55,9 | 54,5 | 52,6 | 56,2 |
| Dehnung bei Streck (%) | 23,6 | 3,8 | 4 | 3,6 | 3,7 | 4 | 3,5 |
| E-Modul (N/mm) | 2492 | 2354 | 2304 | 2469 | 2410 | 2326 | 2488 |
| Schlag-Zähigkeit (kJ/m$^2$) | 88 | 147 | 124 | 144 | 173 | 173 | 199 |
| Kerbschlagzähigkeit (kJ/m$^2$) | 5 | 5,9 | 6,1 | 5,6 | 5,9 | 6,1 | 4,3 |
| | | | | | | | |
| Fließ-Spirale 260/80°C -2mm (cm) | 42 | 45 | 46 | 42 | 43 | 45 | 35 |

Tabelle 5

| Komponenten (Gew.-%) | 1V | 2V | 3V |
|---|---|---|---|
| A/1 | 99 | 97 | 95 |
| B/1V | 1,00 | 3,00 | 5,00 |
| VZ | 125,6 | 140,5 | 120,7 |
| MVR | 64,2 | 110 | 105 |
| DSC | | | |
| GPC | | | |
| | | | |
| Mechanik | | | |
| Spannung bei Max: (N/mm) | | | |
| Dehnung bei Bruch/Streck (%) | | | |

(fortgesetzt)

| Mechanik | | | |
|---|---|---|---|
| E-Modul (N/mm) | | | |
| Schlagzähigkeit (-30°C) (kJ/m$^2$) | 156 | 118 | 61,5 |
| Schlagzähigkeit - gekerbt (kJ/m$^2$) | 2,5 | 2,2 | 2 |
| Fließspirale 260/80°C -2 mm (mm) | 43 | 43,5 | 46,2 |

**Patentansprüche**

**1.** Thermoplastische Formmassen enthaltend

A) 10 - 99,99 Gew.-% mindestens eines thermoplastischen Polyesters
B) 0,01 - 50 Gew.-% eines hoch- oder hyperverzweigten Polyesters des Typs $A_xB_y$ mit x mindestens 1,1 und y mindestens 2,1
C) 0 - 60 Gew.-% weiterer Zusatzstoffe,

wobei die Summe der Gewichtsprozente der Komponenten A) bis C) 100 % ergibt.

**2.** Thermoplastische Formmassen nach Anspruch 1, in denen die Komponente B) ein Zahlenmittel des Molekulargewichts $M_n$ von 300 bis 30000 g/mol aufweist.

**3.** Thermoplastische Formmassen nach den Ansprüchen 1 oder 2, in denen die Komponente B) eine Glasübergangstemperatur $T_g$ von -50°C bis 140°C aufweist.

**4.** Thermoplastische Formmassen nach den Ansprüchen 1 bis 3, in denen die Komponente B) eine OH-Zahl (gemäß DIN 53240) von 0 bis 600 mg KOH/g Polyester aufweist.

**5.** Thermoplastische Formmassen nach den Ansprüchen 1 bis 4, in denen die Komponente B) eine COOH-Zahl (gemäß DIN 53240) von 0 bis 600 mg KOH/g Polyester aufweist.

**6.** Thermoplastische Formmassen nach den Ansprüchen 1 bis 5, in denen die Komponente B) wenigstens eine OH-Zahl oder eine COOH-Zahl größer 0 aufweist.

**7.** Thermoplastische Formmassen nach den Ansprüchen 1 bis 6, in denen die Komponente B) erhältlich ist, indem man

(a) eine oder mehrere Dicarbonsäuren oder eines oder mehrere Derivate derselben mit einem oder mehreren mindestens trifunktionellen Alkoholen
oder
(b) eine oder mehrere Tricarbonsäuren oder höhere Polycarbonsäuren oder eines oder mehrere Derivate derselben mit einem oder mehreren Diolen gegebenenfalls in Gegenwart eines Lösemittels und optional in Gegenwart eines sauren anorganischen, metallorganischen oder organischen Katalysators oder eines Enzyms umsetzt.

**8.** Thermoplastische Formmassen nach den Ansprüchen 1 bis 7, in denen die Komponente B) gemäß Anspruch 7 erhältlich ist, wobei man in Variante (a) einen mindestens trifunktionellen Alkohol einsetzt, der Hydroxylgruppen von mindestens zwei chemisch unterschiedlichen Reaktivitäten aufweist.

**9.** Thermoplastische Formmassen nach den Ansprüchen 1 bis 7, in denen die Komponente B) gemäß Anspruch 7 erhältlich ist, wobei man in Variante (a) einen mindestens trifunktionellen Alkohol einsetzt, der Hydroxylgruppen von jeweils chemisch gleicher Reaktivität aufweist.

**10.** Thermoplastische Formmassen nach den Ansprüchen 1 bis 7, wobei man in Variante (b) gemäß Anspruch 7 einen mindestens trifunktionellen Alkohol einsetzt, der Hydroxylgruppen von jeweils chemisch gleicher Reaktivität aufweist.

**11.** Thermoplastische Formmassen nach den Ansprüchen 1 bis 7, in denen die Komponente B) gemäße Variante (b) gemäß Anspruch 7 erhältlich ist, indem man mindestens eine Tricarbonsäure oder Polycarbonsäure einsetzt, die Carboxylgruppen von mindestens zwei unterschiedlichen Reaktivitäten aufweist.

**12.** Verwendung der thermoplastischen Formmassen gemäß den Ansprüchen 1 bis 11 zur Herstellung von Fasern, Folien und Formkörpern jeglicher Art.

**13.** Fasern, Folien und Formkörper jeglicher Art erhältlich aus den thermoplastischen Formmassen gemäß den Ansprüchen 1 bis 11.

**Claims**

**1.** A thermoplastic molding composition comprising

A) from 10 to 99.99% by weight of at least one thermoplastic polyester
B) from 0.01 to 50% by weight of a highly branched or hyperbranched polyester of $A_xB_y$ type where x is at least 1.1 and y is at least 2.1
C) from 0 to 60% by weight of other additives,

where the total of the percentages by weight of components A) to C) is 100%.

**2.** The thermoplastic molding composition according to claim 1, in which component B) has a number-average molar mass $M_n$ of from 300 to 30 000 g/mol.

**3.** The thermoplastic molding composition according to claim 1 or 2, in which component B) has a glass transition temperature $T_g$ of from -50°C to 140°C.

**4.** The thermoplastic molding composition according to claims 1 to 3, in which component B) has an OH number (to DIN 53240) of from 0 to 600 mg KOH/g of polyester.

**5.** The thermoplastic molding composition according to claims 1 to 4, in which component B) has a COOH number (to DIN 53240) of from 0 to 600 mg KOH/g of polyester.

**6.** The thermoplastic molding composition according to claims 1 to 5, in which component B) at least has an OH number or a COOH number greater than 0.

**7.** The thermoplastic molding composition according to claims 1 to 6, in which component B) is obtainable by reacting

(a) one or more dicarboxylic acids or one or more derivatives of the same with one or more at least trihydric alcohols
or
(b) one or more tricarboxylic acids or higher polycarboxylic acids or one or more derivatives of the same with one or more diols

if appropriate in the presence of a solvent and optionally in the presence of an acidic inorganic, organometallic, or organic catalyst, or of an enzyme.

**8.** The thermoplastic molding composition according to claims 1 to 7, in which component B) is obtainable according to claim 7, where, in variant (a), use is made of an at least trihydric alcohol which has hydroxy groups having at least two different chemical reactivities.

**9.** The thermoplastic molding composition according to claims 1 to 7, in which component B) is obtainable according to claim 7, where, in variant (a), use is made of an at least trihydric alcohol which has hydroxy groups which all have identical chemical reactivity.

**10.** The thermoplastic molding composition according to claims 1 to 7, where variant (b) according to claim 7 uses an at least trihydric alcohol which has hydroxy groups all of which have identical chemical reactivity.

11. The thermoplastic molding composition according to claims 1 to 7, in which component B) is obtainable according to variant (b) according to claim 7, by using at least one tricarboxylic acid or polycarboxylic acid which has carboxy groups having at least two different reactivities.

12. The use of the thermoplastic molding compositions according to claims 1 to 11 for producing fibers, films, or moldings of any type.

13. A fiber, a film, or a molding of any type obtainable from the thermoplastic molding compositions according to claims 1 to 11.

**Revendications**

1. Masses de moulage thermoplastiques contenant :

   A) 10 à 99,99% en poids d'au moins un polyester thermoplastique,
   B) 0,01 à 50% en poids d'un polyester très ramifié ou hyper-ramifié, du type $A_xB_y$, x ayant pour valeur au moins 1,1 et y au moins 2,1,
   C) 0 à 60% en poids d'autres additifs,
   la somme des pourcentages en poids des composants A) à C) étant de 100%.

2. Masses de moulage thermoplastiques selon la revendication 1, dans lesquelles le composant B) présente une moyenne en nombre du poids moléculaire $M_n$ de 300 à 30 000 g/mole.

3. Masses de moulage thermoplastiques selon la revendication 1 ou 2, dans lesquelles le composant B) présente une température de transition vitreuse $T_g$ de -50°C à 140°C.

4. Masses de moulage thermoplastiques selon les revendications 1 à 3, dans lesquelles le composant B) présente un indice de OH (selon la norme DIN 53240) de 0 à 600 mg de KOH/g de polyester.

5. Masses de moulage thermoplastiques selon les revendications 1 à 4, dans lesquelles le composant B) présente un indice de COOH (selon la norme DIN 53240) de 0 à 600 mg de KOH/g de polyester.

6. Masses de moulage thermoplastiques selon les revendications 1 à 5, dans lesquelles le composant B) présente au moins un indice de OH ou un indice de COOH supérieur à 0.

7. Masses de moulage thermoplastiques selon les revendications 1 à 6, dans lesquelles on peut obtenir le composant B) en faisant réagir :

   (a) un ou plusieurs acides dicarboxyliques, ou un ou plusieurs de leurs dérivés, avec un ou plusieurs alcools au moins trifonctionnels
   ou
   (b) un ou plusieurs acides tricarboxyliques ou acides polycarboxyliques supérieurs, ou un ou plusieurs de leurs dérivés, avec un ou plusieurs diols, éventuellement en présence d'un solvant et, en variante, en présence d'un catalyseur acide inorganique, organométallique ou organique ou d'une enzyme.

8. Masses de moulage thermoplastiques selon les revendications 1 à 7, dans lesquelles on peut obtenir le composant B) selon la revendication 7 en utilisant, dans la variante (a), un alcool au moins trifonctionnel qui présente des groupements hydroxyle d'au moins deux réactivités différentes sur le plan chimique.

9. Masses de moulage selon les revendications 1 à 7, dans lesquelles on peut obtenir le composant B) selon la revendication 7 en utilisant, dans la variante (a), un alcool au moins trifonctionnel qui présente des groupements hydroxyle dont les réactivités respectives sont identiques sur le plan chimique.

10. Masses de moulage thermoplastiques selon les revendications 1 à 7, dans lesquelles on utilise dans la variante (b) de la revendication 7 un alcool au moins trifonctionnel, qui présente des groupements hydroxyle dont les réactivités respectives sont identiques sur le plan chimique.

11. Masses de moulage thermoplastiques selon les revendications 1 à 7, dans lesquelles on peut obtenir le composant B) selon la variante (b) de la revendication 7 en utilisant au moins un acide tricarboxylique ou un acide polycarboxylique, qui présente des groupements carboxyle d'au moins deux réactivités différentes.

12. Utilisation des masses de moulage thermoplastiques selon les revendications 1 à 11 pour fabriquer des fibres, des feuilles et des corps de moulage de toutes sortes.

13. Fibres, feuilles et corps de moulage de toutes sortes que l'on peut obtenir à partir des masses de moulage thermoplastiques selon les revendications 1 à 11.